# EUROPÄISCHE PATENTSCHRIFT

(11) **EP 0 999 002 B1**
(45) Veröffentlichungstag und Bekanntmachung des Hinweises auf die Patenterteilung: **21.08.2002**
(21) Anmeldenummer: 99120509.7
(22) Anmeldetag: 15.10.1999
(51) Int. Cl.: B23B 3/30, B23Q 39/04

(54) **Drehmaschine mit Gegenspindel**
Lathe with secondary spindle
Tour avec broche additionelle

(30) Priorität: 06.11.1998 DE 19851228
(43) Veröffentlichungstag der Anmeldung: 10.05.2000
(73) Patentinhaber: Gildemeister Drehmaschinen GmbH, 33689 Bielefeld (DE)
(72) Erfinder: Denkena, Berend, Dr., 33415 Verl (DE); Abens, Guy, 91150 Roinvilliers (FR)
(74) Vertreter: Thielking, Bodo, Dipl.-Ing.

(56) Entgegenhaltungen:
- DE-A- 3 817 161
- PATENT ABSTRACTS OF JAPAN vol. 013, no. 365 (M-859), 15. August 1989 (1989-08-15) & JP 01 121103 A (OKUMA MACH WORKS LTD), 12. Mai 1989 (1989-05-12)

## Beschreibung

Die Erfindung betrifft einen Drehmaschine nach dem Oberbegriff des Patentanspruchs 1.

Eine bekannte Drehmaschine dieser Art (JP 1-121 103 A) weist eine Gegenspindel und einen Reitstock auf, die parallel zueinander in einem gemeinsamen Gehäuse gelagert sind. Das Spannfutter der Gegenspindel und die Reitstockspitze weisen zu entgegengesetzten Seiten des Gehäuses, das in Spindelachsrichtung verfahrbar und um eine zur Spindelachsrichtung senkrechte Achse verschwenkbar ist, um entweder die Gegenspindel oder die Reitstockspitze in fluchtende Gegenüberstellung zur Hauptspindel zu bringen.

Mit der bekannten Drehmaschine sollen einerseits kurze Werkstücke auf Vor- und Rückseite oder andererseits lange Werkstücke bearbeitet werden, die im Spannfutter der Hauptspindel gespannt und durch die Reitstockspitze an ihrem gegenüberliegenden Ende abgestützt werden müssen. Die gleichzeitige Bearbeitung eines von dem Reitstock abgestützten, ersten Werkstücks und eines von der Gegenspindel gehaltenen, zweiten Werkstücks ist nicht möglich.

Es ist weiterhin eine Drehmaschine mit einer Gegenspindel bekannt (DE 30 35 451 A1), bei der das eine Ende eines langen Werkstücks bearbeitet wird, während es in der Hauptspindel gehalten wird, und bei der das gegenüberliegende Ende des Werkstücks bearbeitet wird, während es in der Gegenspindel gehalten wird. Bei dieser Drehmaschine kann der zwischen den bearbeiteten Enden liegende Bereich des Werkstücks bearbeitet werden, während das Werkstück gleichzeitig in der Hauptspindel und in der Gegenspindel eingespannt ist.

Auch bei dieser Drehmaschine ist jedoch ein gleichzeitiges Bearbeiten des Außenumfangs langer Werkstücke und eines Endes eines nachfolgenden oder vorausgehenden Werkstücks nicht möglich. Die Abstützung eines schlanken Werkstücks mittels eines Reitstocks ist nicht vorgesehen.

Ausgehend von dem eingangs erwähnten Stand der Technik liegt der Erfindung die Aufgabe zugrunde, auch bei schlanken Werkstücken eine gleichzeitige Bearbeitung aufeinanderfolgender Werkstücke zu ermöglichen.

Die Lösung der Aufgabe erfolgt mit den Merkmalen des Patentanspruchs 1.

Die erfindungsgemäße Drehmaschine erlaubt die Bearbeitung eines teilweise vorbearbeiteten Werkstücks in der Gegenspindel, während gleichzeitig ein zwischen Hauptspindel und Reitstock eingespanntes Werkstück bearbeitet wird. Dadurch verkürzt sich die Bearbeitungszeit erheblich. Die Abstützung des Werkstücks mittels eines Reitstocks erhöht die Genauigkeit, weil der Außenumfang des Werkstücks ohne Schnittunterbrechung bis auf das im Spannfutter der Hauptspindel gehaltene Werkstückende überdreht werden kann. Schließlich entfällt die bei gleichzeitig in Haupt- und Gegenspindel gespannten Werkstücken notwendige Spindelsynchronisation der Werkstückspindelantriebe.

Vorteilhafte Ausgestaltungen der Erfindung ergeben sich aus den Unteransprüchen.

Eine bevorzugte Ausführungsform der Erfindung wird nachstehend anhand der Zeichnungen im einzelnen beschrieben. Es zeigen:
- Figur 1 -: eine schematische perspektivische Darstellung einer Drehmaschine;
- Figur 2 -: eine schematische Draufsicht senkrecht zur Führungsbahnebene der Drehmaschine nach Fig. 1 während der Bearbeitung eines in der Gegenspindel und eines in der Hauptspindel gespannten Werkstücks;
- Figur 3 -: eine schematische Draufsicht gemäß Fig. 2 während der durch die Werkzeuge zweier Werkzeugträger erfolgenden Bearbeitung eines mit einem Reitstock abgestützten Werkstücks;
- Figur 4 -: eine schematische Draufsicht nach Fig. 2 während der gleichzeitigen Bearbeitung eines in der Gegenspindel gespannten und eines durch den Reitstock abgestützten Werkstücks.

Auf einem Maschinenbett 4 einer Drehmaschine ist eine Hauptspindel 1 unverschieblich befestigt. Gegenüberliegend zur Hauptspindel 1 ist eine Gegenspindel 2 angeordnet, deren Spannfutter 2d dem Spannfutter 1d der Hauptspindel 1 zugewandt ist. Auf einander gegenüberliegenden Seiten der Drehachse 1e der Hauptspindel 1 sind je ein Werkzeugträger 8 und 9 auf je einem Kreuzschlitten 6 und 7 numerisch gesteuert verfahrbar angeordnet.

Die Gegenspindel 2 ist ebenfalls auf einem Kreuzschlitten 5 befestigt, der in Richtung der Drehachse 1e und senkrecht dazu verschieblich ist. Auf dem Kreuzschlitten 5 ist auch ein in Z-Richtung verschieblicher Reitstock 3 angeordnet. Der Reitstock 3 wird gemeinsam mit der Gegenspindel 2 von dem Kreuzschlitten 5 verschoben und ist in Richtung der Drehachse 1e mindestens in zwei Endlagen verfahrbar.

Das Drehmaschinenbett 4 weist Längsführungen 4b auf, die einen Z-Schlitten 5a führen. Auf dem Z-Schlitten 5a ist ein X-Schlitten 5b quer zur Drehachse 1e verschieblich geführt. Auf dem X-Schlitten 5b ist die Gegenspindel 2 mit ihrem Gehäuse 2a befestigt. Neben der Gegenspindel 2 ist der in Z-Richtung verfahrbare Reitstock 3 auf dem X-Schlitten 5b gelagert. Die Verfahrbarkeit des Reitstocks 3 in Z-Richtung wird entweder durch nicht dargestellte, auf dem X-Schlitten 5b selbst vorgesehene Längsführungen ermöglicht oder durch an dem Gehäuse 2a vorgesehene, ebenfalls nicht dargestellte Längsführungen für ein Reitstockgehäuse 3c.

In dem Reitstockgehäuse 3c ist eine Pinole 3a längsverschieblich geführt, die an ihrem der Hauptspindel 1 zugewandten Ende eine frei drehbar gelagerte Reitstockspitze 3b trägt. Es ist nicht in allen Fällen nötig, den gesamten Reitstock in Z-Richtung verfahrbar zu machen. Vielmehr kann es ausreichen, das Reitstockgehäuse 3c fest auf dem X-Schlitten 5b und die Verfahrbarkeit der Reitstockspitze in Z-Richtung durch die Verfahrbarkeit der Pinole 3a selbst zu erzeugen, die dann einen ausreichenden Ausfahrweg in Z-Richtung aufweisen muß.

Hauptspindel 1 und Gegenspindel 2 sind weitgehend identisch als integrierte Motorspindeln ausgeführt. In einem Hauptspindelgehäuse 1a ist eine Drehspindel 1c drehbar gelagert, die von einem sie umgebenden Hauptspindelantrieb 1b rotierend angetrieben wird. An dem Flansch der Drehspindel 1c ist ein Spannfutter 1d befestigt, das ein zu bearbeitendes Werkstück 11 spannt.

In dem Gehäuse 2a der Gegenspindel 2 ist eine Drehspindel 2c, die ein Spannfutter 2d zur Aufnahme eines Werkstücks 10 trägt, gemeinsam mit ihrem Gegenspindelantrieb 2b untergebracht.

Ein Z-Schlitten 6a des Kreuzschlittens 6 ist auf Längsführungen 4a des Drehmaschinenbettes 4 geführt. Er trägt Planführungen 6c für den X-Schlitten 6b, auf dem der obere Werkzeugträger 8 angeordnet ist. Der Werkzeugträger 8 ist als Werkzeugrevolver 8a mit einer Revolverscheibe 8b zur Aufnahme der Werkzeughalter 8d in Werkzeugaufnahmen 8c ausgebildet. Die Werkzeugaufnahmen 8c sind am Außenumfang der Revolverscheibe 8b angeordnet, die von einem Schaltantrieb 8e in unterschiedliche Drehlagen geschwenkt werden kann. In die Werkzeugaufnahmen 8c können sowohl von einem Werkzeugantrieb 8f rotierend antreibbare Werkzeuge 8g als auch Drehwerkzeuge 8h eingesetzt werden.

Ein Z-Schlitten 7a des unteren Kreuzschlittens 7 ist auf Längsführungen 4c des Drehmaschinenbettes 4 geführt. Er trägt quer zur Drehachse 1e verlaufende Planführungen 7c, auf denen ein X-Schlitten 7b verschieblich gelagert ist.

Der als Werkzeugrevolver 9a ausgebildete Werkzeugträger 9 ist auf dem X-Schlitten 7b befestigt. Seine Revolverscheibe 9b wird durch einen Schaltantrieb 9e um eine zur Drehachse 1e parallele Achse geschaltet. In Werkzeugaufnahmen 9c der Revolverscheibe 9b können sowohl feststehende Drehwerkzeuge 9h als auch durch einen Werkzeugantrieb 9f rotierend antreibbare Werkzeuge 9g mit Werkzeughaltern 9d eingesetzt werden.

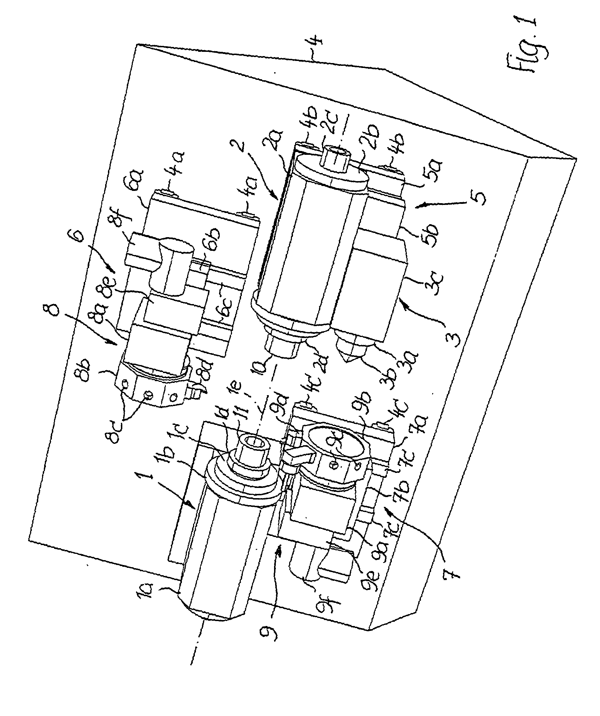

Das Werkstück 10 wird nach seiner Bearbeitung in der Hauptspindel 1 von der in fluchtender Gegenüberstellung zur Hauptspindel 1 befindlichen Gegenspindel 2 übernommen. Hierzu wird diese von dem Z-Schlitten 5a so weit in Richtung auf die Hauptspindel 1 vorgeschoben, daß das Spannfutter 2d das im Bedarfsfall noch abzustechende Werkstück 10 ergreifen kann. Nachdem das Werkstück 10 im Spannfutter 2d gespannt und das Spannfutter 1d der Hauptspindel 1 gelöst wurde, wird die Gegenspindel 2 in ihre rückwärtige Lage zurückgezogen (vgl. Fig. 1).

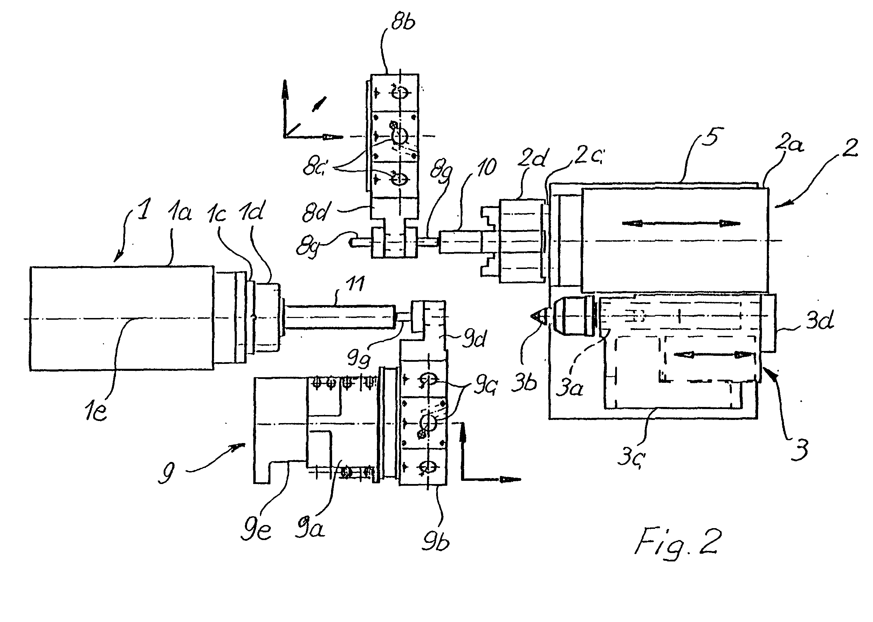

Das anschließend zu bearbeitende Werkstück 11 kann nun durch eine Bohrung der Hauptspindel 1 nachgeschoben werden, sofern es sich um einen Abschnitt einer Werkstoffstange handelt. Alternativ kann ein Wellenteil in das Spannfutter 1d der Hauptspindel 1 eingesetzt werden. Die Gegenspindel 2 wird durch den X-Schlitten 5b quer zur Drehachse 1e soweit verschoben, daß die Reitstockspitze in der Drehachse 1e liegt. In dieser Lage wird das eine Ende des Werkstücks 11 von den Werkzeugen des Werkzeugträgers 9 bearbeitet: Es wird beispielsweise eine Zentrierbohrung zur Aufnahme der Reitstockspitze 3b in die Stirnfläche des Werkstücks 11 eingebracht. Währenddessen wird das Werkstück 10 an seinem vorherigen Einspannende von einem der der Gegenspindel zugewandten Werkzeuge 8g des Werkzeugträgers 8 fertiggestellt (vgl. Fig. 2).

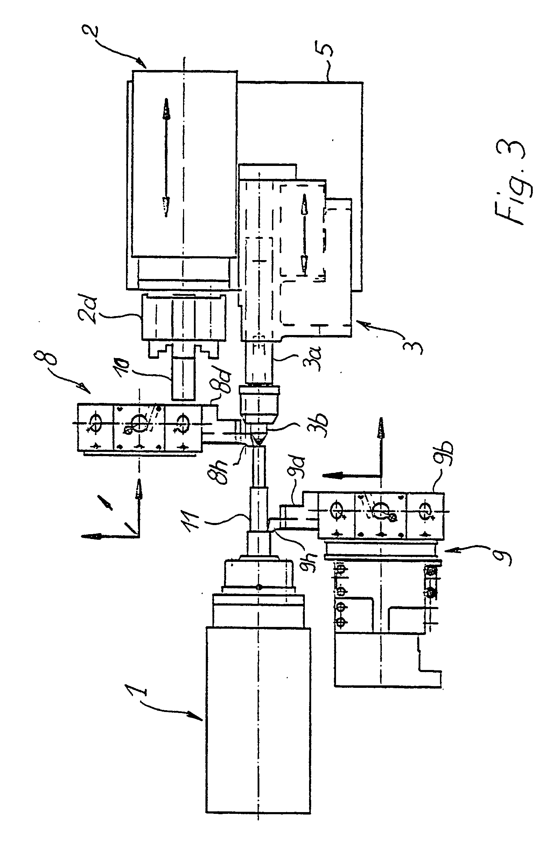

Nachdem die Zentrierbohrung fertiggestellt ist, wird der Reitstock 3 auf dem X-Schlitten 5b durch den Antrieb 3d in seine vordere Position verschoben, in der die Reitstockspitze 3b kurz vor dem Werkstück 11 steht. Sollte diese Position durch den Vorschubweg des Reitstocks 3 nicht erreicht werden können, so kann der Z-Schlitten 5a um den fehlenden Betrag verfahren werden. Durch das Verfahren des Reitstocks 3 in seine vorgeschobene Position verbleibt in Spindelachsrichtung vor der Gegenspindel 2 genügend Raum, um das Werkstück 10 weiter bearbeiten und um, wie in Fig. 3 gezeigt, das Werkstück 11 kollisionsfrei mit einem Drehwerkzeug 8h des Werkzeugträgers 8 am Außenumfang bearbeiten zu können.

Die Reitstockspitze 3b wird durch einen nicht dargestellten Vorschubantrieb der Pinole 3a in die Zentrierbohrung gepreßt. Bei dieser Konfiguration der Drehspindeln 1c und 2c und des Reitstocks 3 kann das Werkstück 11 von den Werkzeugen 8h und 9h beider Werkzeugträger 8 und 9 gleichzeitig bearbeitet werden, wobei sich die auf das Werkstück 11 wirkenden Abdrängkräfte gegenseitig aufheben. Die Genauigkeit der Bearbeitung wird daher nicht nur wegen der Abstützung durch den Reitstock 3 sondern auch durch die Art der möglichen Bearbeitung verbessert.

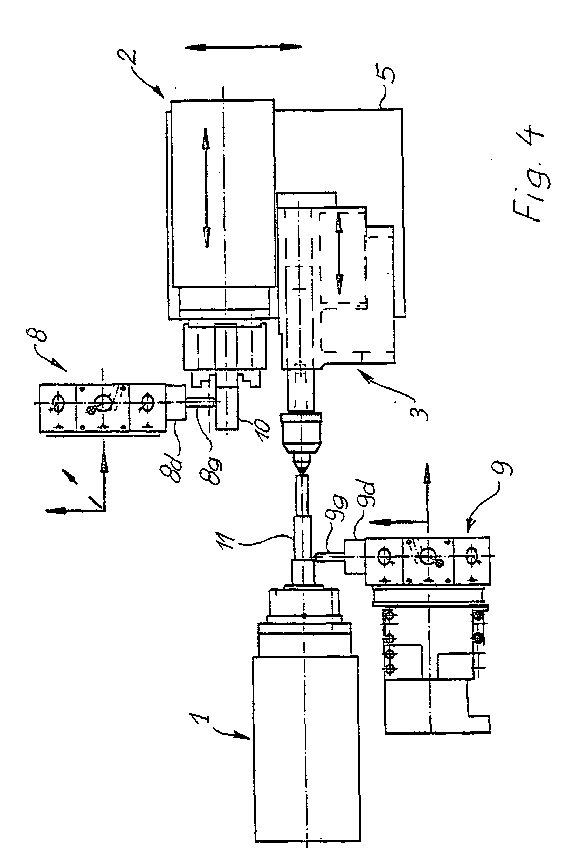

Fig. 4 zeigt die Bearbeitung am Außenumfang je eines von der Hauptspindel 1 rotierend angetriebenen Werkstücks 11 und eines von der Gegenspindel 2 rotierend angetriebenen Werkstücks 10 von unterschiedlichen Werkzeugträgern 8 und 9 aus. In dem gezeigten Beispiel werden Querbearbeitungen mit rotierend angetriebenen Werkzeugen 8g und 9g vorgenommen. Die an beiden Drehspindeln 1c und 2c einsetzbaren Werkzeugträger 8 und 9 können außer in X- und Z-Richtung auch in der zur X- und Z-Richtung senkrechten Y-Richtung verfahrbar sein, um außermittige Bohrungen und Schlüsselflä-chen an von beiden Drehspindeln 1c und 2c gehaltenen Werkstücken 10 und 11 fertigen zu können.

Die nicht dargestellten Vorschubantriebe der Kreuzschlitten 6 und 7 für die Werkzeugträger 8 und 9 sowie des Z-Schlittens 5a der Gegenspindel 2 sind in üblicher Weise numerisch gesteuert. Als Antriebe zur Verschiebung des X-Schlittens 5b der Gegenspindel 2, des Reitstocks 3 relativ zur Gegenspindel 2 und der Reitstockpinole können einfache und kostengünstige Positionierantriebe dienen, die nur jeweils zwei Endpositionen anfahren können, weil Zwischenpositionen nicht benötigt werden.

## Patentansprüche

1. Drehmaschine mit einer ortsfesten Hauptspindel (1), einer in Z-Richtung verfahrbaren Gegenspindel (2) mit zwei auf Kreuzschlitten (6; 7) in Z- und X-Richtung verfahrbaren Werkzeugträgern (8; 9), die beiderseits der Drehachse (1e) angeordnet sind, und mit einem Reitstock (3), dessen Reitstockspitze (3b) in die Spindelachsrichtung verstellbar und in Z-Richtung verfahrbar ist, wobei die Gegenspindel (2) und der Reitstock (3) auf einem gemeinsamen in Z- und X-Richtung verfahrbaren Kreuzschlitten (5) angeordnet sind, **dadurch gekennzeichnet, daß** die Reitstockspitze (3b) mit dem Reitstock (3) gegenüber der Gegenspindel (2) zusätzlich in Z-Richtung verfahrbar ist.

2. Drehmaschine nach Anspruch 1,
**dadurch gekennzeichnet,**
**daß** der Antrieb des X-Schlittens (5b) für die Gegenspindel (2) und den Reitstock (3) zum Verschieben zwischen lediglich zwei Festpositionen derart ausgebildet ist, daß wahlweise der Reitstock (3) oder die Gegenspindel (2) mit der Drehachse (1e) der Hauptspindel (1) fluchten.

3. Drehmaschine nach Anspruch 1 oder 2,
**dadurch gekennzeichnet,**
**daß** der Antrieb (3d) des Reitstocks (3) in Z-Richtung zum Verschieben zwischen lediglich zwei Festpositionen ausgebildet ist.

4. Drehmaschine nach einem oder mehreren der Ansprüche 1 bis 3,
**dadurch gekennzeichnet,**
**daß** die Längsführung des Reitstocks (3) auf dem Gehäuse (2a) der Gegenspindel (2) angeordnet ist.

5. Drehmaschine nach einem oder mehreren der Ansprüche 1 bis 4,
**dadurch gekennzeichnet,**
**daß** die Pinole (3a) des Reitstocks (3) in Z-Richtung in einem Reitstockgehäuse (3c) verfahrbar gelagert ist.

6. Drehmaschine nach einem oder mehreren der Ansprüche 1 bis 5,
**dadurch gekennzeichnet,**
**daß** mindestens einer der mit Kreuzschlitten (6; 7) verfahrbaren Werkzeugträger (8; 9) als Werkzeugrevolver (8a; 9a) ausgebildet ist.

7. Drehmaschine nach Anspruch 6,
**dadurch gekennzeichnet,**
**daß** mindestens einer der Werkzeugrevolver (8a; 9a) auch in Y-Richtung verfahrbar ist.

8. Drehmaschine nach einem oder mehreren der Ansprüche 1 bis 7 ,
**dadurch gekennzeichnet,**
**daß** jeder Werkzeugrevolver (8a; 9a) zur Bearbeitung von an Hauptspindel (1) und Gegenspindel (2) gehaltenen Werkstücken (11 und 10) ausgebildet ist.

9. Drehmaschine nach einem oder mehreren der Ansprüche 1 bis 8,
**dadurch gekennzeichnet,**
**daß** der in Y-Richtung verfahrbare Werkzeugrevolver (8a) in einer senkrecht zur Drehachse (1e) der Hauptspindel (1) verschobenen Position zur Bearbeitung eines von der Gegenspindel (2) gehaltenen Werkstücks (10) ausgebildet ist.

10. Drehmaschine nach einem oder mehreren der Ansprüche 1 bis 9,
**dadurch gekennzeichnet,**
**daß** mindestens einer der Werkzeugrevolver (8a; 9a) eine parallel zur Drehachse (1e) schaltbare Revolverscheibe (8b; 9b) aufweist, die Aufnahmen (8c; 9c) für Werkzeughalter (8d; 9d) bzw. Werkzeuge (8g; 9g) an ihrem Außenumfang besitzt, die zur Bearbeitung von sowohl in der Hauptspindel (1) als auch in der Gegenspindel (2) gehaltenen Werkstücken (10; 11) einsetzbar sind.

## Claims

1. Lathe with a fixed main spindle (1), a secondary spindle (2) movable in the Z-direction with two tool holders (8;9) movable on cross slides (6;7) in the Z and X directions and mounted either side of the rotational axis (1e), and with a tailstock (3) whose tailstock tip (3b) can be displaced in the axial direction of the spindle and is movable in the Z-direction, wherein the secondary spindle (2) and tailstock (3) are mounted on a common cross slide (5) movable in the Z and X directions, **characterised in that** the tailstock tip (3b) can be moved with the tailstock (3) additionally in the Z-direction relative to the secondary spindle (2).

2. Lathe according to claim 1 **characterised in that** the drive of the X-slide (5b) for the secondary spindle (2) and the tailstock (3) is designed for displacement between only two fixed positions so that selectively either the tailstock (3) or the secondary spindle (2) aligns with the axis of rotation (1e) of the main spindle (1).

3. Lathe according to claim 1 or 2 **characterised in that** the drive (3d) of the tailstock (3) in the Z-direction is designed for displacement between only two fixed positions.

4. Lathe according to one or more of claims 1 to 3 **characterised in that** the longitudinal guide of the tailstock (3) is mounted on the housing (2a) of the secondary spindle (2).

5. Lathe according to one or more of claims 1 to 4 **characterised in that** the sleeve (3a) of the tailstock (3) is mounted movable in the Z-direction in a tailstock housing (3c).

6. Lathe according to one or more of claims 1 to 5 **characterised in that** at least one of the tool holders (8;9) which are movable with the cross slides (6;7) is formed as a tool turret.

7. Lathe according to claim 6 **characterised in that** at least one of the tool turrets (8a; 9a) is also movable in the Y-direction.

8. Lathe according to one or more of claims 1 to 7 **characterised in that** each tool turret (8a; 9a) is formed for machining workpieces (11, 10) which are held on the main spindle (1) and secondary spindle (2).

9. Lathe according to one or more of claims 1 to 8 **characterised in that** the tool turret (8a) movable in the Y-direction in a position displaced perpendicular to the axis of rotation (1e) of the main spindle (1) is designed to machine a workpiece (10) held by the secondary spindle (2).

10. Lathe according to one or more of claims 1 to 9 **characterised in that** at least one of the tool turrets (8a, 9a) has a turret disc (8b; 9b) which can be shifted parallel to the axis of rotation (1e) and which has on its external circumference sockets (8a; 9c) for tool holders (8a; 9d) or tools (8g; 9g) which can be used for machining workpieces (10; 11) held both in the main spindle (1) and in the secondary spindle (2).

## Revendications

1. Tour comprenant une broche principale, fixe (1), une contre-broche (2), mobile dans l'axe Z, deux porte-outils (8 ; 9) déplaçables à l'aide de chariots transversaux (6 ; 7), dans les axes Z et X, et disposées de part et autre de l'axe de rotation (1e), ainsi qu'une contre-poupée (3) dont la contre-pointe (3b) est réglable dans le sens de l'axe de la broche et mobile dans le sens de l'axe Z, la contre-broche (2) et la contre-poupée (3) étant installées sur un chariot à mouvement croisé (5) qui se déplace dans les axes Z et X,
**caractérisé en ce que**
la contre-pointe (3b) peut être également déplacée dans le sens de l'axe Z, avec la contre-poupée (3).

2. Tour selon la revendication 1,
**caractérisé en ce que**
l'entraînement du chariot (5b) de la contre-broche (2) et de la contre-poupée (3) est conçu pour le déplacement entre, seulement, deux positions fixes, en sorte que la contre-poupée (3) ou la contre-broche (2) puisse être amenée, à volonté, en alignement de l'axe de rotation (1e) de la broche principale (1).

3. Tour selon la revendication 1 ou 2,
**caractérisé en ce que**
l'entraînement (3d) de la contre-poupée (3), dans le sens Z, est conçu pour assurer le déplacement entre seulement deux positions fixes.

4. Tour selon une ou plusieurs revendications 1 à 3,
**caractérisé en ce que**
le dispositif de guidage longitudinal de la contre-poupée (3) est installé sur la boîte (2a) de la contre-broche.

5. Tour selon une ou plusieurs revendications 1 à 4,
**caractérisé en ce que**
le fourreau (3a) de la contre-poupée (3) est monté dans la boîte (3c) de la contre-poupée et peut être déplacé selon l'axe Z.

6. Tour selon une ou plusieurs revendications 1 à 5,
**caractérisé en ce que**,
tout au moins, l'un des porte-outils (8 ; 9), mobiles sur chariots transversaux (6 ; 7), est conçu en forme de tourelle (8a ; 9a).

7. Tour selon la revendication 6,
**caractérisé en ce que**
l'une des tourelles (8a ; 9a), au moins, est également mobile selon l'axe Y.

8. Tour selon une ou plusieurs revendications 1 à 7,
**caractérisé en ce que**
chaque tourelle porte-outil (8a : 9a) est conçue en vue du traitement de pièces à usiner qui sont supportées par la broche principale (1) et la contre-broche (2).

9. Tour selon une ou plusieurs revendications 1 à 8,
**caractérisé en ce que**
la tourelle (8a), mobile dans le sens Y, est conçue en vue de l'usinage d'une pièce (10) supportée par la contre-broche (2), dans une position décalée, perpendiculaire à l'axe de rotation (1e) de la broche principale (1).

10. Tour selon une ou plusieurs revendications 1 à 9,
**caractérisé en ce que**
l'une des tourelles (8a ; 9a), au moins, présente un plateau (8b; 9b) dont le pourtour est équipé de réceptacles (8c ; 9c) qui accueillent des porte-outils (8d ; 9d) ou des outils (8g ; 9g) utilisés l'usinage de pièces (10; 11) serrées serrées aussi bien dans la broche principale (1) que dans la contre-broche (2).
